# EUROPÄISCHE PATENTSCHRIFT

(11) **EP 2 767 512 B1**
(45) Veröffentlichungstag und Bekanntmachung des Hinweises auf die Patenterteilung: **10.05.2017**
(21) Anmeldenummer: 14164076.3
(22) Anmeldetag: 03.03.2005
(51) Int. Cl.: C01G 33/00, C01G 35/00, C01G 1/02, C01B 21/082, C04B 35/495, H01M 6/18, H01M 8/12, H01B 1/12

(54) **Chemisch stabiler fester Lithiumionenleiter**
Chemically stable solid lithium ion conductors
Conducteur d´ions lithium solide, chimiquement stable

(30) Priorität: 06.03.2004 DE 102004010892; 27.01.2005 WO PCT/EP2005/000809
(43) Veröffentlichungstag der Anmeldung: 20.08.2014
(62) Teilanmeldung aus: 05715707.5
(73) Patentinhaber: BASF SE, 67056 Ludwigshafen am Rhein (DE)
(72) Erfinder: Weppner, Werner, 24226 Heikendorf (DE); Thangadurai, Venkataraman, Calgary, AB T2N 1N4 (CA)
(74) Vertreter: BASF IP Association

(56) Entgegenhaltungen:
- THANGADURAI, VENKATARAMAN ET AL: "Crystal Structure Revision and Identification of Li+-Ion Migration Pathways in the Garnet-like Li5La3M2O12 (M = Nb, Ta) Oxides", CHEMISTRY OF MATERIALS , 16(16), 2998-3006 CODEN: CMATEX; ISSN: 0897-4756, 2004, XP002329147,
- THANGADURAI, VENKATARAMAN ET AL: "Novel fast lithium ion conduction in garnet-type Li5La3M2O12 (M = Nb, Ta)", JOURNAL OF THE AMERICAN CERAMIC SOCIETY , 86(3), 437-440 CODEN: JACTAW; ISSN: 0002-7820, 2003, XP002329148,
- MAZZA, D.: "Remarks on a ternary phase in the lanthanum sesquioxide-metal oxide (M2O5)-lithium oxide system (M = Nb, Ta)", MATERIALS LETTERS , 7(5-6), 205-7 CODEN: MLETDJ; ISSN: 0167-577X, 1988, XP002329149,
- THANGADURAI V ET AL: "Investigations on electrical conductivity and chemical compatibility between fast lithium ion conducting garnet-like Li6BaLa2Ta2O12 and lithium battery cathodes", JOURNAL OF POWER SOURCES, ELSEVIER SEQUOIA S.A. LAUSANNE, CH, Bd. 142, Nr. 1-2, 24. März 2005 (2005-03-24), Seiten 339-344, XP004812990, ISSN: 0378-7753

## Beschreibung

Die vorliegende Erfindung betrifft chemisch stabile feste lonenleiter, insbesondere Lithiumionenleiter, Verfahren zu deren Herstellung und ihre Verwendung in Batterien, Akkumulatoren und elektrochromen Vorrichtungen.

Mobile Energiespeicher mit hohen Energiedichten (und hohen Leistungdichten) werden für eine Vielzahl technischer Geräte benötigt, allen voran für Mobiltelefone und tragbare Computer (z.B. Notebooks). Von herausragender Bedeutung sind dabei wiederaufladbare chemische Energiespeicher, insbesondere Sekundärbatterien und Superkondensatoren.

Die bislang höchsten Energiedichten im Bereich von 0,2 bis 0,4 Wh/cm³ werden heute kommerziell mit sogenannten Lithiumionenbatterien realisiert. Diese bestehen meist aus einem flüssigen organischen Lösungsmittel (z.B. EC/DEC) mit Lithium-Salz (z.B. LiPF₆), einer Anode aus Graphit mit interkaliertem Lithium und einer Kathode aus Lithiumkobaltoxid, wobei das Kobalt auch teilweise oder vollständig durch Nickel oder Mangan ersetzt sein kann.

Bekanntlich ist die Lebensdauer solcher Lithiumionenbatterien recht begrenzt, sodass sie oft noch während der Lebensdauer des zu versorgenden Gerätes ersetzt werden müssen. Zudem ist die Ersatzbeschaffung gemeinhin teuer und die Entsorgung der Altbatterien problematisch, da einige der Inhaltsstoffe nicht umweltverträglich sind.

Im Betrieb erweisen sich die Batterien nach dem Stand der Technik in vielen Anwendungen als nicht ausreichend leistungsfähig (z.B. Offline-Betrieb eines Notebooks max. für wenige Stunden). Für den Einsatz von Elektroden, die höhere Spannungen ermöglichen, beispielsweise 5 V oder mehr, sind die Batterien chemisch instabil; die organischen Elektrolytbestandteile beginnen sich bei Spannungen über 2,5 V zu zersetzen. Der flüssige Elektrolyt stellt ohnehin ein Sicherheitsproblem dar: neben Auslauf-, Brand- und Explosionsgefahr ist auch das Wachstum von Dendriten möglich, was zu einer hohen Selbstentladung und Erhitzung führen kann.

Für einige technische Zielsetzungen sind Flüssigelektrolytbatterien grundsätzlich nachteilig, weil sie stets eine Mindestdicke besitzen müssen und somit als dünne Energiespeicher, z.B. auf Chipkarten, nur beschränkt einsetzbar sind.

Auch feste Lithiumionenleiter, wie etwa Li_{2,9}PO_{3,3}N_{0,46} (Li₃₋ₓPO_{4-y}N_{y}, LIPON) sind bekannt und im Labormaßstab in Dünnschichtbatterien verwendet worden. Allerdings besitzen diese Materialien allgemein eine deutlich geringere Lithiumleitfähigkeit als Füssigelektrolyte. Feste Lithiumionenleiter mit den besten lonenleitfähigkeiten sind Li₃N und Li-ß-alumina. Beide Verbindungen sind sehr empfindlich gegenüber Wasser (Feuchte). Li₃N zersetzt sich schon bei einer Spannung von 0,445 V bei Raumtemperatur; Li-ß-alumina ist chemisch nicht stabil.

In der Arbeit von Thangadurai et al. "Novel fast lithium ion conduction in garnet-type Li5La3M2O12 (M = Nb, Ta)" (J. Am. Ceram. Soc. 86, 437 - 440, 2003) wurden Lithiumionenleiter mit granatartiger Struktur vorgestellt.

Bei Granaten handelt es sich um Orthosilikate der allgemeinen Zusammensetzung A₃B₂(SiO₄)₃, wobei A und B achtfach bzw. sechsfach koordinierte Kationenstellen darstellen. Die einzelnen SiO₄-Tetraeder sind miteinander durch ionische Bindungen mit den interstitiellen B-Kationen verbunden.

Die Verbindungen der Formel Li₅La₃M₂O₁₂ (M = Nb, Ta) weisen eine granatartige Struktur auf. Sie kristallisieren in einer kubischen Symmetrie mit der Gitterkonstante a = 12,797 Å bzw. 12,804 Å für die entsprechende Verbindung mit M = Nb bzw. Ta. Verglichen mit der idealen Granatstruktur liegt ein Überschuss von 16 Lithiumionen pro Formeleinheit vor. Die La³⁺-und M⁵⁺-Ionen besetzen die achtfach bzw. sechsfach koordinierten Stellen, während Lithiumionen Positionen mit sechsfacher Koordination einnehmen. Die Ähnlichkeit zwischen der idealen Granatstruktur und Li₅La₃M₂O₁₂ liegt darin, dass Alkali/Seltenerdmetall-Ionen die dodekaedrischen (achtfachen) Koordinationsstellen besetzen und M-Atome die sechsfach koordinierten Positionen besetzen. Der Hauptunterschied der Strukturen liegt darin, dass in der idealen Granatstruktur Si die Position mit vierfacher Sauerstoff-Koordination einnimmt, wohingegen in dem granatartigen Li₅La₃M₂O₁₂ Li die stark verzerrten oktaedrischen Positionen besetzt. Die granatartige Struktur weist zwei Typen von LiO₆-Oktaedern auf; von diesen ist Li(I)O₆ stärker verzerrt als Li(II)O₆. MO₆-Oktaeder sind kubisch von sechs LiO₆-Oktadern und zwei Lithium-Leerstellen umgeben. Die Leerstellen sind entlang der Achsen zwischen den benachbarten MO₆-Oktaedern angeordnet.

Die granatartigen Li₅La₃M₂O₁₂-Verbindungen weisen eine merkliche Lithiumionenleitfähigkeit auf. Insbesondere wurde an der Tantal-haltigen Verbindung Li₅La₃Ta₂O₁₂ gezeigt, dass Volumen- und Korngrenzenleitfähigkeit bei der granatartigen Struktur dazu tendieren, in vergleichbarer Größenordnung zu liegen. Die totale Leitfähigkeit liegt damit außerordentlich hoch, sogar über der von Li-ß-alumina oder von Li₉AlSiO₈, jedoch immer noch deutlich unter den Leitfähigkeiten von LISICON oder Li₃N.

Aufgabe der vorliegenden Erfindung war es nun, verbesserte feste Ionenleiter bereitzustellen, die eine hohe Ionenleitfähigkeit, eine geringe elektronische Leitfähigkeit und eine hohe chemische Stabilität aufweisen. Insbesondere lag der Erfindung die Aufgabe zugrunde, verbesserte Lithiumionenleiter bereitzustellen.

Es wurde gefunden, dass die Materialien mit granatartiger Struktur eine überraschend hohe ionische Leitfähigkeit aufweisen. Die neuartigen festen Ionenleiter sind formal von den bereits bekannten granatartigen Strukturen der Zusammensetzung Li₅La₃M₂O₁₂ abgeleitet. Überraschenderweise ergeben sich aus dieser Verbindung durch aliovalente Substitution granatartige Strukturen mit deutlich verbesserter Ionenleitfähigkeit.

Unter "aliovalenter Substitution" versteht man die Substitution eines Ions durch ein Ion einer anderen Oxidationsstufe, wobei die daraufhin erforderliche Ladungskompensation durch Kationenleerstellen, Anionenleerstellen, interstitielle Kationen und/oder interstitielle Anionen erfolgen kann.

Durch aliovalente Substitutionen ausgehend von den bekannten granatartigen Strukturen Li₅La₃M₂O₁₂ kann erfindungsgemäß die Konnektivität des Netzwerkes erhöht und die Anzahl an verfügbaren Leerstellen variiert werden. Dabei werden bevorzugt die La³⁺-Stellen aliovalent substituiert, beispielsweise durch zweiwertige Kationen. Der Ladungsausgleich kann bevorzugt durch Li⁺-Kationen erfolgen. Durch geeignete Dotierung kann die Leitfähigkeit der Struktur maßgeschneidert werden.

Darüber hinaus können erfindungsgemäß anstelle von Li, La, M und O auch beliebige andere Elemente oder Kombinationen von Elementen eingesetzt werden. Durch teilweise oder vollständige formale Substitution der Li-Kationen durch andere Metallkationen, insbesondere durch Alkaliionen, gelingt es, beliebige Ionenleiter zu erhalten. Die erfindungsgemäßen festen Ionenleiter sind durch die oben ausführlich beschriebene granatartige Struktur gekennzeichnet.

Somit stellt die vorliegende Erfindung einen festen Ionenleiter mit einer granatartigen Kristallstruktur bereit, der die stöchiometrische Zusammensetzung

L₅₊ₓA_{y}G_{z}M'₂O₁₂

aufweist, worin
L jeweils unabhängig ein beliebiges bevorzugt einwertiges Kation ist,
A jeweils unabhängig ein ein-, zwei-, drei- oder vierwertiges Kation ist,
G jeweils unabhängig ein ein-, zwei-, drei- oder vierwertiges Kation ist, M' jeweils unabhängig ein drei-, vier- oder fünfwertiges Kation ist, 0 < x ≤ 3, 0 ≤ y ≤ 3,0 ≤ z ≤ 3 und
worin O teilweise oder vollständig ersetzt sein kann durch zweiwertige und/oder dreiwertige Anionen wie z.B. N³⁻**.**

Innerhalb einer Struktur dieser formalen Zusammensetzung können L, A, G und M' jeweils gleich oder unterschiedlich sein.

L ist besonders bevorzugt ein Alkalimetallion, beispielsweise Li⁺, Na⁺ oder K⁺. Dabei sind insbesondere auch Kombinationen verschiedener Alkalimetallionen für L möglich.

A stellt ein beliebiges ein-, zwei-, drei- oder vierwertiges Kation oder beliebige Kombinationen davon dar. Bevorzugt können für A zweiwertige Metallkationen eingesetzt werden. Besonders bevorzugt sind Erdalkalimetallionen wie Ca, Sr, Ba und/oder Mg, sowie zweiwertige Übergangsmetallkationen wie z.B. Zn.

G stellt ein beliebiges zwei-, drei-, vier- oder fünfwertiges Kation oder beliebige Kombinationen davon dar. Bevorzugt können für G dreiwertige Metallkationen eingesetzt werden. Besonders bevorzugt ist G = La.

M' stellt ein beliebiges zwei-, drei-, vier- oder fünfwertiges Kation oder beliebige Kombinationen davon dar. Bevorzugt können für M' fünfwertige Kationen eingesetzt werden. Weiter bevorzugt ist M' ein Übergangsmetall, das bevorzugt ausgewählt ist aus Nb und Ta. Weitere Beispiele für geeignete fünfwertige Kationen sind Sb und V. Bei der Auswahl von M' ist es günstig, Übergangsmetall-Ionen zu wählen die eine hohe Stabilität gegenüber einer Reduktion aufweisen. Am meisten bevorzugt ist M' = Ta.

In einer Struktur der obigen Zusammensetzung kann O²⁻ ganz oder teilweise durch andere Anionen ersetzt sein. Beispielsweise ist es günstig, O²⁻ ganz oder teilweise durch andere zweiwertige Anionen zu ersetzen. Außerdem kann O²⁻ auch durch dreiwertige Anionen aliovalent substituiert werden mit entsprechendem Ladungsausgleich.

In der obigen Zusammensetzung ist weiter
0 < x ≤ 3, bevorzugt 0 < x ≤ 2 und besonders bevorzugt 0 < x ≤ 1;
0 ≤ y ≤ 3, und 0 ≤ z ≤ 3. Das stöchiometrische Verhältnis der Komponenten wird dabei so gewählt, dass eine insgesamt ungeladene granatartige Struktur vorliegt.

In einer bevorzugten Ausführungsform der vorliegenden Erfindung ist L ein einwertiges Kation, A ist ein zweiwertiges Kation, G ist ein dreiwertiges Kation und M' ist ein fünfwertiges Kation. Weiter ist in dieser bevorzugten Ausführungsform die Stöchiometrie der Verbindung bevorzugt:

L₅₊ₓAₓG₃₋ₓM'₂O₁₂

worin x wie oben definiert ist und bevorzugt 0 < x ≤ 1 ist.

Die vorliegende Erfindung stellt in einem spezielleren Aspekt einen festen Litiumionenleiter der stöchiometrischen Zusammensetzung Li₆ALa₂M'₂O₁₂ bereit, wobei A ein zweiwertiges Metall bedeutet und M' ein fünfwertiges Metall bedeutet. Innerhalb einer Struktur dieser formalen Zusammensetzung können A und M' jeweils gleich oder unterschiedlich sein.

Vorzugsweise wird A ausgewählt aus Erdalkalimetallen, bevorzugt aus Ca, Sr, Ba und/oder Mg. Ebenfalls bevorzugt kann A aus zweiwertigen Übergangsmetallen ausgewählt werden wie beispielsweise A = Zn. Am meisten bevorzugt ist A = Sr oder Ba.

M' kann ein beliebiges fünfwertiges Kation, beispielsweise ein Metall in der Oxidationsstufe +V sein, bevorzugt ist M' ein Übergangsmetall, das bevorzugt ausgewählt ist aus Nb und Ta. Weitere Beispiele für geeignete fünfwertige Kationen sind Sb und V. Bei der Auswahl von M' ist es günstig, Übergangsmetall-Ionen zu wählen die eine hohe Stabilität gegenüber einer Reduktion durch elementares Lithium aufweisen. Am meisten bevorzugt ist M' = Ta.

Lithiumionenleiter der Zusammensetzung Li₆ALa₂M'₂O₁₂ weisen eine granatartige Kristallstruktur auf. Gegenüber den bekannten Verbindungen der Zusammensetzung Li₅La₃M₂O₁₂ wurde La formal durch ein zweiwertiges Ion A und ein Lithium-Kation ersetzt und somit der Lithiumanteil der Struktur erhöht. Dadurch gelingt es, mit den Verbindungen der vorliegenden Erfindung deutlich verbesserte Lithiumionenleiter bereitzustellen.

Die Materialien der Zusammensetzung Li₆ALa₂M'₂O₁₂ weisen gegenüber den Verbindungen des Standes der Technik eine erhöhte Lithiumleitfähigkeit auf. Beispielsweise liegt die Lithiumleitfähigkeit von Li₆ALa₂Ta₂O₁₂ (A = Sr, Ba) mit 10⁻⁵ S/cm bei 20 °C um eine Größenordnung höher als die von LIPON. Aufgrund der Granatstruktur der Verbindungen der vorliegenden Erfindung, bei der es sich um eine 3D-isotrope Struktur handelt, ist die Lithiumionenleitung ohne Vorzugsrichtung dreidimensional möglich.

Die elektronische Leitfähigkeit der Verbindungen der vorliegenden Erfindung ist dagegen vernachlässigbar gering. Die polykristallinen Proben der Verbindungen der vorliegenden Erfindung zeigen einen geringen Korngrenzenwiderstand, sodass die Gesamtleitfähigkeit sich nahezu ausschließlich aus der Volumenleitfähigkeit ergibt.

Ein weiterer Vorteil der Materialien ist ihre hohe chemische Stabilität. Die Materialien zeigen insbesondere keine erkennbaren Veränderungen unter Erwärmung in Kontakt mit geschmolzenem Lithium. Bei Temperaturen bis 350 °C und Gleichspannungen bis 6 V zeigen sich keine chemischen Zersetzungen.

Gemäß einem weiteren Aspekt betrifft die vorliegende Erfindung Verfahren zur Herstellung der festen Ionenleiter mit granatartiger Struktur. Die Verbindungen können durch Umsetzung entsprechender Salze und/oder Oxide der enthaltenen Elemente, beispielsweise durch eine Festphasenreaktion gebildet werden. Besonders geeignete Ausgangsmaterialien sind Nitrate, Carbonate und Hydroxide, die im Verlauf der Umsetzung in entsprechende Oxide umgewandelt werden.

Spezieller betrifft die vorliegende Erfindung Verfahren zur Herstellung der festen Ionenleiter der Zusammensetzung L₅₊ₓAₓG₃₋ₓM'₂O₁₂, (z.B. Li₆ALa₂M'₂O₁₂). Die Materialien können durch Umsetzung entsprechender Salze und/oder Oxide von A, G und M' mit einem Hydroxid, Nitrat oder Carbonat von L in einer Festphasenreaktion erhalten werden. A und M' sind dabei wie oben definiert. Bevorzugt wird das zweiwertige Metall A in Form von Nitraten eingesetzt. Dabei sind Ca(NO₃)₂, Sr(NO₃)₂ und Ba(NO₃)₂ bevorzugt. Für G wird bevorzugt La eingesetzt, welches bevorzugt in Form von La₂O₃ verwendet wird. M' wird vorteilhafterweise als Oxid eingesetzt, bevorzugt sind Nb₂O₅ und Ta₂O₅. L wird bevorzugt in Form von LOH, LNO₃ oder L₂CO₃ eingesetzt. Beispielsweise kann bevorzugt LiOH·H₂O verwendet werden. Um einen Gewichtsverlust an L (z.B. L = Li) bei der Wärmebehandlung der Proben auszugleichen, wird das entsprechende Salz bevorzugt im Überschuss eingesetzt, geeignet ist beispielsweise ein Überschuss von 10 %.

Die Ausgangsstoffe werden in einem ersten Schritt gemischt und können beispielsweise durch Zirkonoxid-Kugelmahlen in 2-Propanol gemahlen werden. Das so erhaltene Gemisch wird anschließend für mehrere Stunden, bevorzugt für 2-10 h, an Luft auf Temperaturen im Bereich von bevorzugt 400-1000 °C erhitzt. Besonders geeignet sind dabei Temperaturen von ca. 700 °C und eine Wärmebehandlungsdauer von etwa 6 Stunden. Anschließend wird erneut ein Mahlvorgang durchgeführt, vorzugsweise ebenfalls durch Zirkonoxidkugelmahlen in 2-Propanol. Das Reaktionsprodukt wird anschließend bei isostatischem Druck in Formstücke, beispielsweise in Pellets, gepresst. Diese werden dann für mehrere Stunden, bevorzugt für 10-50 h, weiter bevorzugt für 20-30 h, bei Temperaturen im Bereich von bevorzugt 700-1200 °C, weiter bevorzugt 800-1000 °C, gesintert. Besonders geeignet sind dabei Temperaturen von ca. 900 °C und eine Wärmebehandlungsdauer von etwa 24 Stunden. Bei diesem Sintervorgang ist es vorteilhaft, die Proben mit einem Pulver der gleichen Zusammensetzung abzudecken, um übermäßige Verluste des L-Hydroxids zu vermeiden.

Die mit dem Herstellungsverfahren der vorliegenden Erfindung erhaltenen festen Ionenleiter (z.B. Lithiumionenleiter) sind als Festkörperelektrolyte ein wertvolles Ausgangsmaterial.

Da die Materialien eine außergewöhnlich hohe Ionenleitfähigkeit bei vernachlässigbarer Elektronenleitung besitzen, können sie als Feststoffelektrolyt für Batterien (z.B. Lithiumbatterien) mit sehr hoher Energiedichte verwendet werden. Die hohe Stabilität der Materialien gegenüber chemischen Reaktionen z.B. mit elementarem Lithium und gängigen Elektrodenmaterialien führt dazu, dass beispielsweise die festen Lithiumionenleiter der vorliegenden Erfindung in Lithiumionenbatterien praktisch anwendbar sind.

Auch der Widerstand der Phasengrenze zwischen dem Feststoffelektrolyt der vorliegenden Erfindung und den Elektroden ist im Vergleich zu üblichen Elektrolytmaterialien sehr klein. Dadurch können unter Verwendung der erfindungsgemäßen Materialien Batterien mit vergleichsweise hoher Leistung (hohen Strömen) hergestellt werden. Die Verwendung der Festkörperelektrolyte der vorliegenden Erfindung bedeutet eine erhöhte Sicherheit gegenüber der Verwendung von flüssigen Elektrolyten. Dies ist inbesondere bei der Anwendung in Kraftfahrzeugen von Vorteil.

In einem weiteren Aspekt betrifft die vorliegende Erfindung die Verwendung der festen Ionenleiter (z.B. Lithiumionenleiter) in elektrochromen Systemen (Fenster, Bildschirme, Fassaden etc.) sowie für die instantane Energiespeicherung und -abgabe in Superkondensatoren (Supercaps).

Unter Verwendung der erfindungsgemäßen Ionenleiter gelingt es dabei, Energiedichten von Kondensatoren mit 100 F/cm³ zu erreichen. Ein weiterer Aspekt der Erfindung ist die Verwendung der granatartigen festen Ionenleiter als Sensoren, beispielsweise für zahlreiche Gase.

Die festen Ionenleiter der vorliegenden Erfindung können in Form von Pellets oder als dünne Schichten, in kristalliner oder amorpher Form verwendet werden.

### Figuren:

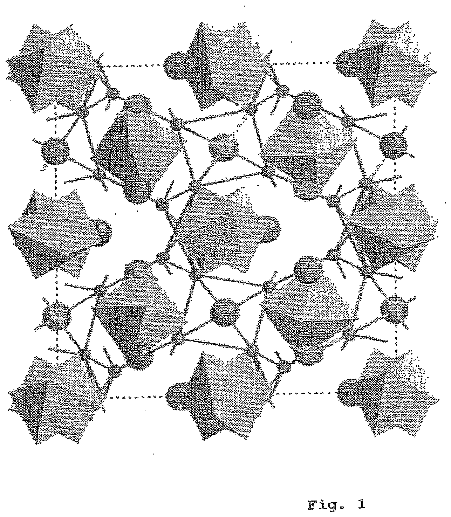

- Fig. 1: zeigt eine Einheitszelle der Kristallstruktur von Li₅La₃M₂O₁₂ (M=Nb, Ta);
- Fig. 2: zeigt die gemessene Leitfähigkeit von Li₆BaLa₂Ta₂O₁₂ im Vergleich mit anderen festen Lithiumionenleitern. Die erfindungsgemäßen Materialien besitzen sehr hohe ionische Leitfähigkeiten, die sich mit denen von Li_{3,5}P_{0,5}Si_{0,5}O₄ oder sogar Li₃N vergleichen lassen.
- Fig. 3: zeigt den Gleichgewichtselektronenstrom als Funktion der angelegten Spannung für Li₆BaLa₂Ta₂O₁₂, erhalten bei 22 °C und bei 44 °C durch Hebb-Wagner (HW)-Messungen mit einer Lithiumionenblockierenden Elektrode unter Verwendung von Lithium als Referenzelektrode. Die Messungen wurden in einer mit Argon gefüllten Glovebox bei einem Sauerstoffpartialdruck < 1 ppm durchgeführt.

Die vorliegende Erfindung wird durch das folgende Beispiel weiter veranschaulicht.

### Beispiel: Herstellung von Pellets aus Li₆ALa₂Ta₂O₁₂ (A = Ca, Sr, Ba)

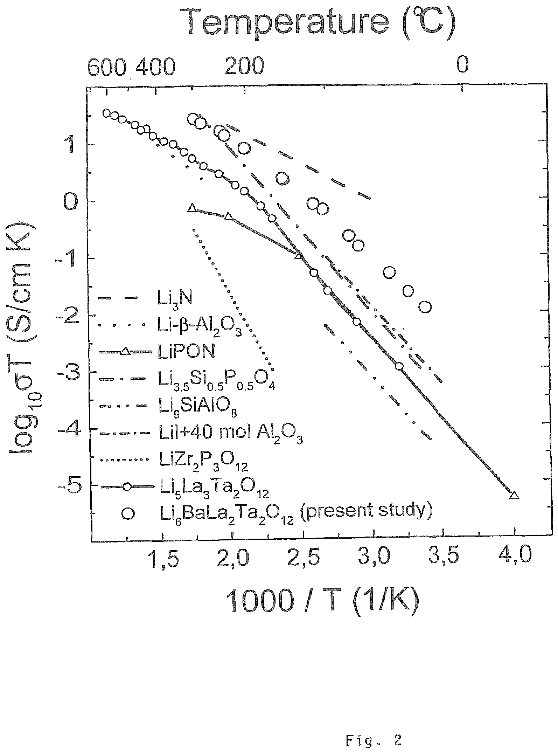

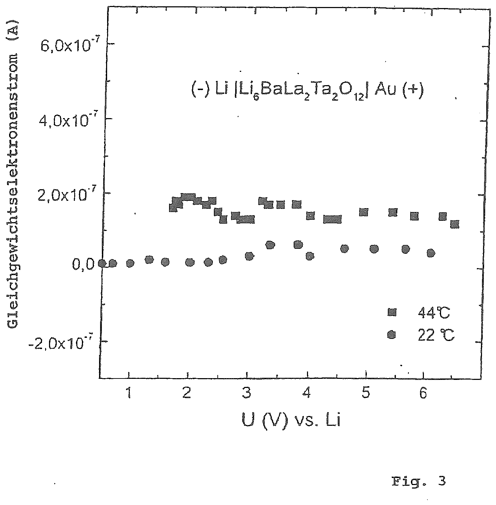

La₂O₃ (vorgetrocknet bei 900 °C für 24 h), Nb₂O₅ und A(NO₃)₂ wurden in stöchiometrischem Verhältnis mit einem 10%igen Überschuss an LiOH·H₂O vermischt und unter Verwendung von Zirkonoxid-Kugeln für 12 h in 2-Propanol gemahlen. Die erhaltene Mischung wurde für 12 h an Luft auf 700 °C erhitzt und anschließend erneut kugelgemahlen. Anschließend wurde die Mischung mit isostatischem Druck zu Pellets gepresst und mit einem Pulver derselben Zusammensetzung bedeckt um übermäßige Verluste des Lithiumoxids zu vermeiden. Die Pellets wurden für 24 h bei 900 °C gesintert. Anschließend wurde die Leitfähigkeit und die chemische Stabilität der erhaltenen festen Lithiumionenleiter untersucht. Die Ergebnisse sind in Tabelle 1 und in den Figuren 2 und 3 gezeigt.

**Tabelle 1: Widerstand von Li₆ALa₂Ta₂O₁₂ (A = Sr, Ba) bei 22 °C an Luft**

| Verbindung | Rᵥₒₗ | Cᵥₒₗ | R_{gb} | C_{gb} | Cₑₗ | σₜₒₜₐₗ | Eₐ |
|---|---|---|---|---|---|---|---|
| | [kΩ] | [F] | [kΩ] | [F] | [F] | [Scm⁻¹] | [eV] |
| Li₆SrLa₂Ta₂O₁₂ | 18,83 | 3,0x10⁻¹¹ | 3,68 | 8,5x10⁻⁹ | 5,7x10⁻⁶ | 7,0x10⁻⁶ | 0,50 |
| Li₆BaLa₂Ta₂O₁₂ | 3,45 | 1,2x10⁻¹⁰ | 1,34 | 1,3x10⁻⁷ | 1,2x10⁻⁶ | 4,0x10⁻⁵ | 0,40 |

| | | | | | | | |
|---|---|---|---|---|---|---|---|
| vol: Volumen gb: Korngrenzen | | | | | | | |

## Patentansprüche

1. Fester Ionenleiter, **dadurch gekennzeichnet, dass** er eine granatartige Kristallstruktur aufweist und dass er eine stöchiometrische Zusammensetzung aufweist, die formal durch aliovalente Substitution von Li₅La₃M₂O₁₂, worin M Nb oder Ta ist, abgeleitet ist.

2. Fester Ionenleiter nach Anspruch 1, **dadurch gekennzeichnet, dass** er die stöchiometrische Zusammensetzung L₅₊ₓA_{y}G_{z}M'₂O₁₂ aufweist, worin L jeweils unabhängig ein beliebiges bevorzugt einwertiges Kation ist, A jeweils unabhängig ein ein-, zwei-, drei- oder vierwertiges Kation ist, G jeweils unabhängig ein ein-, zwei-, drei- oder vierwertiges Kation ist, M'jeweils unabhängig ein drei-, vier- oder fünfwertiges Kation ist,
0 < x ≤ 2, 0 ≤ y ≤ 3, 0 ≤ z ≤ 3, und
worin O teilweise oder vollständig ersetzt sein kann durch zweiwertige und/oder dreiwertige Anionen wie z.B. N³⁻.

3. Fester Ionenleiter nach einem der vorhergehenden Ansprüche, wobei die stöchiometrische Zusammensetzung
L₅₊ₓAₓG₃₋ₓM'₂O₁₂
ist, und worin
0 < x ≤ 1,
L ein einwertiges Alkalimetall-Kation ist,
A ein zweiwertiges Metallkation ist,
G ein dreiwertiges Kation ist, und
M' ein fünfwertiges Kation ist.

4. Fester Ionenleiter nach Anspruch 2 oder 3, wobei L ausgewählt ist aus Li, Na und K und jeweils gleich oder verschieden sein kann.

5. Fester Ionenleiter nach Anspruch 4, wobei L = Li ist.

6. Fester Ionenleiter nach einem der Ansprüche 2 bis 5, wobei A ausgewählt ist aus zweiwertigen Kationen, bevorzugt Erdalkalimetallionen.

7. Fester Ionenleiter nach einem der Ansprüche 2 bis 6, wobei M' ausgewählt ist aus Übergangsmetallionen.

8. Fester Ionenleiter nach einem der Ansprüche 2 bis 7, wobei A ausgewählt ist aus Ca, Sr und/oder Ba und wobei M' ausgewählt ist aus Nb und Ta.

9. Fester Ionenleiter nach Anspruch 7 oder 8, wobei A ausgewählt ist aus Sr und Ba und wobei M' Ta ist.

10. Fester Ionenleiter nach einem der Ansprüche 2 bis 9, **dadurch gekennzeichnet, dass** er bei Lithium-Aktivitäten entsprechend einer Spannung von 5 V gegenüber elementarem Lithium stabil ist.

11. Verfahren zur Herstellung eines festen Ionenleiters nach einem der vorhergehenden Ansprüche, **dadurch gekennzeichnet, dass** Salze und/oder Oxide von L, A, G und M' miteinander umgesetzt werden, wobei die Umsetzung bevorzugt in einer Festphasenreaktion erfolgt.

12. Verfahren nach Anspruch 11 zur Herstellung eines festen Ionenleiters nach Anspruch 3, **dadurch gekennzeichnet, dass** L und A in Form von Nitraten, Carbonaten oder Hydroxiden eingesetzt werden und mit G₂O₃ und M'₂O₅ umgesetzt werden.

13. Verfahren nach einem der Ansprüche 11 bis 12, welches die folgenden Schritte umfasst:
(a) Mischen der Ausgangsstoffe und Kugelmahlen, vorzugsweise mit Zirkonoxid-Kugeln in 2-Propanol,
(b) Erhitzen des Gemischs aus (a) an Luft für 2-10 h auf 400-1000°C, bevorzugt für 6h auf 700°C;
(c) Kugelmahlen, vorzugsweise mit Zirkonoxid-Kugeln in 2-Propanol;
(d) Pressen des Gemischs mit isostatischem Druck zu Pellets; und
(e) Sintern der mit einem Pulver der gleichen Zusammensetzung bedeckten Pellets für 10-50 h bei 700-1200°C, bevorzugt für 24h bei 900°C.

14. Verwendung eines festen Ionenleiters nach einem der Ansprüche 1 bis 10 in Batterien, Akkumulatoren, Supercaps, Brennstoffzellen, Sensoren und/oder elektrochromen Vorrichtungen wie Fenstern, Bildschirmen und Fassaden.

15. Verwendung nach Anspruch 14, wobei der feste Ionenleiter in Form von Pellets, als dünne Schicht, in kristalliner oder amorpher Form verwendet wird.

## Claims

1. A solid ion conductor, wherein said conductor has a garnet-type crystal structure and has a stoichiometric composition formally derived by aliovalent substitution from Li₅La₃M₂O₁₂ where M is Nb or Ta.

2. The solid ion conductor according to claim 1, wherein said conductor has the stoichiometric composition L₅₊ₓA_{y}G_{z}M'₂O₁₂ where L is independently at each occurrence any desired preferably monovalent cation, A is independently at each occurrence a mono-, di-, tri- or tetravalent cation, G is independently at each occurrence a mono-, di-, tri- or tetravalent cation, M' is independently at each occurrence a tri-, tetra- or pentavalent cation, 0 < x ≤ 2, 0 ≤ y ≤ 3, 0 ≤ z ≤ 3 and
where 0 may be partly or fully substituted by divalent and/or trivalent anions such as N³⁻ for example.

3. The solid ion conductor according to any of the preceding claims, wherein the stoichiometric composition is
L₅₊ₓAₓG₃₋ₓM'₂O₁₂
and where
0 < x ≤ 1
L is a monovalent alkali metal cation
A is a divalent metal cation
G is a trivalent cation and
M' is a pentavalent cation.

4. The solid ion conductor according to claim 2 or 3, wherein L is selected from Li, Na and K and may be identical or different at each occurrence.

5. The solid ion conductor according to claim 4, wherein L = Li.

6. The solid ion conductor according to any of claims 2 to 5, wherein A is selected from divalent cations, preferably alkaline earth metal ions.

7. The solid ion conductor according to any of claims 2 to 6, wherein M' is selected from transition metal ions.

8. The solid ion conductor according to any of claims 2 to 7, wherein A is selected from Ca, Sr and/or Ba and wherein M' is selected from Nb and Ta.

9. The solid ion conductor according to either of claims 7 and 8, wherein A is selected from Sr and Ba and wherein M' is Ta.

10. The solid ion conductor according to any of claims 2 to 9, wherein said conductor is stable toward elemental lithium at lithium activities corresponding to a voltage of 5 V.

11. A process for producing a solid ion conductor according to any of the preceding claims, wherein salts and/or oxides of L, A, G and M' are reacted with one another, wherein the reaction is preferably effected in a solid phase reaction.

12. The process according to claim 11 for producing a solid ion conductor according to claim 3, wherein L and A are employed in the form of nitrates, carbonates or hydroxides and reacted with G₂O₃ and M'₂O₅.

13. The process according to either of claims 11 and 12 which comprises the steps of:
(a) mixing the starting materials and ball-milling, preferably with zirconium oxide balls in 2-propanol;
(b) heating the mixture from (a) in air to 400-1000°C for 2-10 h, preferably to 700°C for 6 h,
(c) ball-milling, preferably with zirconium oxide balls in 2-propanol;
(d) pressing the mixture into pellets with isostatic pressure; and
(e) sintering the pellets covered with a powder of identical composition at 700°C to 1200°C for 10-50 h, preferably at 900°C for 24 h.

14. The use of a solid ion conductor according to any of claims 1 to 10 in batteries, accumulators, supercaps, fuel cells, sensors and/or electrochromic apparatuses such as windows, displays and facades.

15. The use according to claim 14, wherein the solid ion conductor is used in the form of pellets, as a thin layer, in crystalline or amorphous form.

## Revendications

1. Conducteur d'ions solide, **caractérisé en ce qu'**il présente une structure cristalline de type grenat et **en ce qu'**il présente une composition stoechiométrique qui est dérivée formellement par substitution aliovalente de Li₅La₃M₂O₁₂, M représentant Nb ou Ta.

2. Conducteur d'ions solide selon la revendication 1, **caractérisé en ce qu'**il présente la composition stoechiométrique L₅₊ₓA_{y}G_{z}M'₂O₁₂, dans laquelle les L représentent chacun indépendamment un cation quelconque de préférence monovalent, les A représentent chacun indépendamment un cation mono-, bi-, tri- ou tétravalent, les G représentent chacun indépendamment un cation mono-, bi-, tri- ou tétravalent, les M' représentent chacun indépendamment un cation tri-, tétra- ou quinquavalent, 0 < x ≤ 2, 0 ≤ y 3, 0 ≤ z ≤ 3, et
O peut être remplacé en partie ou en totalité par des anions bivalents et/ou trivalents tels que par exemple N³⁻.

3. Conducteur d'ions solide selon l'une quelconque des revendications précédentes, dans lequel la composition stoechiométrique est
L₅₊ₓAₓG₃₋ₓM'₂O₁₂
et dans lequel
0 < x ≤ 1,
L représente un cation de métal alcalin monovalent,
A représente un cation de métal bivalent,
G représente un cation trivalent, et
M' représente un cation quinquavalent.

4. Conducteur d'ions solide selon la revendication 2 ou 3, dans lequel L est choisi parmi Li, Na et K, et peut à chaque fois être identique ou différent.

5. Conducteur d'ions solide selon la revendication 4, dans lequel L = Li.

6. Conducteur d'ions solide selon l'une quelconque des revendications 2 à 5, dans lequel A est choisi parmi les cations bivalents, de préférence les ions de métaux alcalino-terreux.

7. Conducteur d'ions solide selon l'une quelconque des revendications 2 à 6, dans lequel M' est choisi parmi les ions de métaux de transition.

8. Conducteur d'ions solide selon l'une quelconque des revendications 2 à 7, dans lequel A est choisi parmi Ca, Sr et/ou Ba, et dans lequel M' est choisi parmi Nb et Ta.

9. Conducteur d'ions solide selon la revendication 7 ou 8, dans lequel A est choisi parmi Sr et Ba, et dans lequel M' représente Ta.

10. Conducteur d'ions solide selon l'une quelconque des revendications 2 à 9, **caractérisé en ce qu'**il est stable à des activités du lithium correspondant à une tension de 5 V par rapport au lithium élémentaire.

11. Procédé de fabrication d'un conducteur d'ions solide selon l'une quelconque des revendications précédentes, **caractérisé en ce que** des sels et/ou des oxydes de L, A, G et M' sont mis en réaction les uns avec les autres, la réaction ayant de préférence lieu par une réaction en phase solide.

12. Procédé selon la revendication 11 pour la fabrication d'un conducteur d'ions solide selon la revendication 3, **caractérisé en ce que** L et A sont utilisés sous la forme de nitrates, carbonates ou hydroxydes, et mis en réaction avec G₂O₃ et M' ₂O₅.

13. Procédé selon l'une quelconque des revendications 11 à 12, qui comprend les étapes suivantes :
(a) le mélange des matières premières et le broyage à billes, de préférence avec des billes d'oxyde de zirconium dans du 2-propanol,
(b) le chauffage du mélange de (a) dans l'air pendant 2 à 10 h à 400 à 1000 °C, de préférence pendant 6 h à 700 °C ;
(c) le broyage à billes, de préférence avec des billes d'oxyde de zirconium dans du 2-propanol ;
(d) la compression du mélange avec une pression isostatique en pastilles ; et
(e) le frittage des pastilles recouvertes avec une poudre de la même composition pendant 10 à 50 h à 700 à 1200 °C, de préférence pendant 24 h à 900 °C.

14. Utilisation d'un conducteur d'ions solide selon l'une quelconque des revendications 1 à 10 dans des batteries, des accumulateurs, des supercondensateurs, des piles à combustible, des capteurs et/ou des dispositifs électrochromes tels que des fenêtres, des écrans et des façades.

15. Utilisation selon la revendication 14, dans laquelle le conducteur d'ions solide est utilisé sous la forme de pastilles, sous la forme d'une couche mince, sous forme cristalline ou amorphe.
